# EUROPEAN PATENT APPLICATION

(11) **EP 4 597 446 A1**
(43) Date of publication of application: **06.08.2025**
(21) Application number: 24223652.9
(22) Date of filing: 30.12.2024
(51) Int. Cl.: G06V 10/75, G06V 20/40, G06V 20/52, G08B 17/12, G06V 10/25, G06V 10/20, G06V 10/26, G06V 10/764

(54) **SYSTEMS, METHODS, AND APPARATUSES FOR DIFFERENTIATING REAL VS. REFLECTED FIRE**

(30) Priority: 31.01.2024 IN 202411006336
(71) Applicant: Life Safety Distribution GmbH, 1180 Rolle (CH)
(72) Inventor: TRIPATHY, Janmejaya, Charlotte, 28202 (US); GANESH, Bindu Rani, Charlotte, 28202 (US)
(74) Representative: Haseltine Lake Kempner LLP

(57) **Abstract**

Various embodiments provide systems, methods, and apparatuses for detecting fire. An apparatus may capture a first image frame from a field of view, capture a second image frame from the field of view, compare a first location of a background feature in the first image frame with a second location of the background feature in the second image frame. The apparatus may calculate a flow vector using the comparison of the first location of the background feature in the first image frame and the second location of the background feature in the second image frame and differentiate between an image of a real fire and an image of a reflected fire using the flow vector.

## Description

### BACKGROUND

Fire detection apparatuses may be used to detect presence of a fire. Some fire detection systems, methods, or apparatuses use an imaging device to detect fire. However, they may suffer from false alarm(s) in detecting fire. Through applied effort, ingenuity, and innovation, many of these identified problems have been solved by developing solutions that are included in embodiments of the present disclosure, examples of which are described in detail herein.

### BRIEF SUMMARY

Various embodiments provide systems, methods, and apparatuses for detecting fire. In various embodiments, a method for detecting fire is provided. The method may comprise capturing a first image frame from a field of view; capturing a second image frame from the field of view; comparing a first location of a background feature in the first image frame with a second location of the background feature in the second image frame; calculating a flow vector using the comparison of the first location of the background feature in the first image frame and the second location of the background feature in the second image frame; and differentiating between an image of a real fire and an image of a reflected fire using the flow vector.

The method may further comprise determining a first location coordinates of the background feature in the first image frame; determining a second location coordinates of the background feature in the second image frame; and determining the flow vector as a vector connecting the first location coordinates with the second location coordinates.

The method may further comprise determining an absolute value of the flow vector; comparing the absolute value of the flow vector with a variation threshold; and differentiating between an image of a real fire and an image of a reflected fire using the comparison of the absolute value of the flow vector with the variation threshold.

The method of may further comprise determining a region in the first image frame and the second image frame, wherein an absolute value of the flow vectors corresponding to a first subset of locations of background features of the region in the first image frame and a second subset of locations of the background features of the region in the second image frame have absolute values greater than the variation threshold.

The method may further comprise determining a surface area of the region; comparing the surface area of the region with a surface area threshold; and determining the region as a potential fire location when the surface area is greater than the surface area threshold.

The method may further comprise detecting an image of a fire in a third image frame; determining a center of the image of fire; determining a center of the region; and determining a distance between the center of the region and the center of the image of fire.

The method may further comprise determining the potential fire location to be a real fire location when the distance between the center of the region and the center of the image of fire is less than a distance threshold.

The method may further comprise determining the potential fire location to be a potential cause of fire location when the distance between the center of the region and the center of the image of fire is greater than a distance threshold.

In various embodiments, the third image frame is the same image frame as any of the first image frame or the second image frame. In various embodiments, the first image frame and the second image frame are subsequent image frames.

In various embodiments, a method for detecting fire is provided. The method may comprise capturing a first image frame from a field of view; capturing a second image frame from the field of view; comparing a group of pixels in the first image frame with the group of pixels in the second image frame; identify background features displayed by the group of pixels that are displaced between the first image frame and the second image frame based on the comparison; identifying an image of a fire in a third image frame; and determining whether the image of a fire is from a real fire or from a reflection of the real fire using the displacement of the background features.

In various embodiments, a fire detection apparatus is provided. The fire detection apparatus may comprise an imaging device configured to capture a first image frame from a field of view; capture a second image frame from the field of view. The fire detection apparatus may comprise one or more computing devices configured to compare a first location of a background feature in the first image frame with a second location of the background feature in the second image frame; calculate a flow vector using the comparison of the first location of the background feature in the first image frame and the second location of the background feature in the second image frame; and differentiate between an image of a real fire and an image of a reflected fire using the flow vector.

In various embodiments, the one or more computing devices are further configured to determine a first location coordinates of the background feature in the first image frame; determine a second location coordinates of the background feature in the second image frame; and determine the flow vector as a vector connecting the first location coordinates with the second location coordinates.

In various embodiments, the one or more computing devices are further configured to determine an absolute value of the flow vector; compare the absolute value of the flow vector with a variation threshold; and differentiate between an image of a real fire and an image of a reflected fire using the comparison of the absolute value of the flow vector with the variation threshold.

In various embodiments, the one or more computing devices are further configured to determine a region in the first image frame and the second image frame, wherein an absolute value of the flow vectors corresponding to a first subset of locations of background features of the region in the first image frame and a second subset of locations of the background features of the region in the second image frame have absolute values greater than the variation threshold.

In various embodiments, the one or more computing devices are further configured to determine a surface area of the region; compare the surface area of the region with a surface area threshold; and determine the region as a potential fire location when the surface area is greater than the surface area threshold.

In various embodiments, the one or more computing devices are further configured to detect an image of a fire in a third image frame; determine a center of the image of fire; determine a center of the region; and determine a distance between the center of the region and the center of the image of fire.

In various embodiments, the one or more computing devices are further configured to determine the potential fire location to be a real fire location when the distance between the center of the region and the center of the image of fire is less than a distance threshold.

In various embodiments, the one or more computing devices are further configured to determine the potential fire location to be a potential cause of fire location when the distance between the center of the region and the center of the image of fire is greater than a distance threshold.

In various embodiments, the first image frame and the second image frame are subsequent image frames, and the third image frame is the same image frame as any of the first image frame or the second image frame.

### BRIEF DESCRIPTION OF THE SEVERAL VIEWS OF THE DRAWINGS

FIG. 1 is a schematic diagram illustrating a fire detection system in accordance with various embodiments.
FIG. 2A illustrates an image frame in accordance with various embodiments.
FIG. 2B illustrates an image frame in accordance with various embodiments.
FIG. 3 illustrates a flow vector in accordance with various embodiments.
FIG. 4 is a schematic diagram illustrating a fire detection system in accordance with various embodiments.
FIG. 5 illustrates a method for detecting fire in accordance with various embodiments.
FIG. 6 illustrates a method for detecting fire in accordance with various embodiments.

### DETAILED DESCRIPTION

### OVERVIEW

Fire may be a major cause of disaster. It may cause loss of life, may cause harm to the environment, and/or may cause economic harm by destroying forests, plants, properties, and/or materials. Various systems, methods, or apparatuses that use imaging may detect a presence of fire. These fire detector apparatuses may detect fire or an image of a fire, for example one caused by reflection from a reflective surface. This may increase a likelihood of false alarm in fire detection.

In some approaches that have been used, visual cameras are used for fire detection, however they may not be able to distinguish between a real fire and a reflection of a fire. Therefore, in some approaches that have been used, a combination of visual and thermal cameras may be used for fire detection and determination of a location of fire. Thermal cameras may be used to reduce a likelihood of false alarm by detecting the heat generated by real fires, therefore distinguishing a reflection of a fire versus the real fire. Using thermal cameras may increase the cost. Additionally, thermal cameras may use Infra-Red (IR) radiation to detect heat, and they may not fully distinguish between the real and reflected fire because the IR radiation may reflect from a reflective surface and may be detected by the thermal camera as the real fire.

In some examples, fire produces electromagnetic radiation with certain characteristics. For example, fire may emit electromagnetic radiation with particular visible and/or infrared light characteristics/properties (e.g., wavelengths, intensity, image shape, and/or the like). These characteristics and properties may depend on characteristics of a fire source (e.g., fuel type). The visible light radiation produced by a fire may be detected using visible wavelength camera(s).

Various examples of the present disclosure provide a fire detection systems, methods, and apparatuses configured to monitor a field of view to detect fire. The fire detection systems, methods, and apparatuses may generate alerts or alarms and/or activate a fire suppression system when fire is detected. An example fire detection system or apparatus may be configured to detect radiation (e.g., electromagnetic radiation) using an imaging device within the field of view. In some embodiments, fire detection apparatuses may be required and/or installed in environments where there is a high likelihood of a fire and/or where certain types of combustible materials are used or stored. For example, fire detection apparatuses may be required at power plants, chemical storage and production facilities, factories, etc. In some embodiments, fire detection apparatuses may be required and/or installed in residential, commercial, recreational and/or other facilities. In various embodiments fire detection apparatuses may be used in any environment where fire may cause harm to life, health, and/or property.

In various embodiments, one or more imaging device, such as visible wavelength camera(s) are used to detect fire. The fire detection system or apparatus may include the imaging device configured to image the field of view. In various embodiments, more than one imaging device may be configured to image the field of view, and at least one of, or a combination of the images captured by the imaging devices may be used to detect fire.

In various embodiments, image processing techniques, such as image recognition techniques are used to detect a fire in the image. For example, a shape, light intensity, color, range of wavelength, etc., associated with fire may be used to detect fire in the image captured from the field of view. In various embodiments, a location of the detected fire within the image and/or within the field of view is determined using the image captured by the one or more imaging devices.

In various embodiments, an air flow imaging method is used to determine whether a fire detected in the image is a real fire or a reflection of a fire. When a real fire is present in the environment, a refractive index of the medium (e.g., air) surrounding the fire changes due to the heat generated by the fire. The change in the refractive index may be due to a variation in molecular property, variation in temperature, and/or the pressure of the gas flow caused by the fire. The medium surrounding a reflection of the fire will not exhibit a similar change in the refractive index. In various embodiments, a determination of the change in the refractive index of the medium is used to detect the real fire and/or determine that a reflection of the fire is not a real fire.

In various embodiments, a hot gas leak and/or a heat generating object may be additionally and/or instead be detected using the variation in the refractive index of the surrounding medium due to the heat. The hot gas or the heat generating object may be and/or become a source or cause of fire. In example embodiments, early detection of fire and/or a cause of fire, determining a location of such in the field of view, and distinguishing such from a reflected image of a fire to reduce false alarm is advantageous. Therefore, it is desirable, in some examples, to use methods and systems described by various embodiments of the present disclosure that detect fire and/or the like, or a source or cause of fire and distinguish with a reflection of fire. It is further desirable, in some examples, to determine at least one of the location, direction, intensity, and the speed of travel of fire and/or the like, or a source or cause of fire.

In various embodiments, an image of the patterns, features, and/or structures in a background (referred to hereinafter and background features) of the field of view is captured. The patterns and/or structures in a background may have distinguishable features. In various embodiments, the background feature may include draw-on patterns or painted patterns. For example, draw-on patterns or painted patterns may be placed in a background of the areas that need to be monitored for fire detection. In various embodiments, the background features may be micro features of the background that are present in the area, such as tubes, fencing, bricks, etc.

In example embodiments, when, there is a real fire, the hot air with a low refractive index distorts an image of the background features. In various embodiments, multiple subsequent images or image frames in time are captured. In various embodiments, to differentiate between a real fire and a reflected fire, a current image frame is compared to a previous image frame. In various embodiments, one or more image fire locations are determined in one or more of the captured image frames, and surroundings regions of the image fire locations are compared between the image frames.

In various embodiments, one or more displaced background features among the subsequent image frames are detected, and a flow vector is calculated. In some embodiments, the flow vector is for example an air flow vector. Considering that reflected fire cannot heat the surrounding air, no background feature distortion in the background image of the surroundings of the reflected fire is determined. Various embodiments of the present disclosure provide differentiating between real fire and reflected fire, for example without requiring bulky mirrors and/or other bulky optics.

In various embodiments, the fire detection apparatus may further include a controller electronically coupled to the camera. The controller may be configured to instruct the camera to capture the sequential series of images. The controller may be configured to compare the images to determine regions where the background features are different in subsequent images.

In various embodiments, the regions where the locations of background features are varied more than a variation threshold compared to a previous image, are detected. In various embodiments, a surface area of each region is determined. If the surface area of the region is greater than a surface area threshold, the region is selected as a potential fire location. A fire location is determined when the potential fire location is in proximity of the image fire location detected using image recognition. In various embodiments, if a distance of a center of the region is less than a distance threshold from a center of the fire detected using image recognition, a fire location is determined. If the distance of a center of the region is greater than the distance threshold from a center of the fire detected using image recognition, a potential fire location is determined which may indication of a location of a where a fire may potentially occur or a cause for fire is present.

In various embodiments, the field of view may be divided into multiple zones with various likelihood of fire in each zone. In various embodiments, when a fire location and/or when a potential fire location is determined, an alert may be generated when the fire location is in a zone with a fire likelihood higher than a fire likelihood threshold. In example embodiments, the zones with higher fire likelihood may be zones where materials that may more easily catch fire are present. In example embodiments, zones with lower fire likelihood are zones where objects made from materials that are less likely to catch fire, such as metal, are present. In various embodiments, if an image fire location is detected using image processing in a zone with a lower fire likelihood, larger variation threshold and/or larger surface area threshold may be used for determining a region of potential fire location.

### DEFINITIONS

The phrases "in one embodiment," "according to one embodiment," "in some embodiments," "in various embodiments" and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration" without a limitation. Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

Use of broader terms such as "comprises," "includes," and "having" should be understood to provide support for narrower terms such as "consisting of," "consisting essentially of," and "comprised substantially of". Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

The term "electronically coupled," "electronically coupling," "electronically couple," "in electronic communication with," or "electronically connected" in the present disclosure refers to two or more elements or components being electronically connected, directly or indirectly. For example, two or more elements or components may be connected through wired means and/or wireless means, such that signals, voltage/current, data, information, or any other electronic signals may be transmitted to and/or received from these elements or components. Electronic connections established via an electrical connector and/or port may refer to wired connections.

The term "mechanically coupled" in the present disclosure refers to two or more mechanical elements (for example, but not limited to, a frame, a surface, a support unit, a joint, etc.) being physically connected in various ways such as directly, through intermediary elements, and/or using fastener(s), clasps, clamps, joints, pin joint, axle, hinge, adhesive, etc. The term "mechanically coupled" may refer to any of movable, turntable, swiveling, pivoting, fixed, and/or stationary mechanical coupling and/or any other similar type of mechanical coupling. In a non-limiting example, two components are mechanically coupled using a force, such as but not limited to magnetic force, force caused by air pressure, adhesive force, mechanical force, and/or other similar or related forces.

The term "fire" may refer to combustion, smoldering, ignition, burning, excessive heat, spark and/or flame associated with or related to a state, process, or instance of combustion in which fuel or other material is ignited and combined with oxygen, giving off light, heat, and/or flame.

The term "imaging device" refers to a device configured to capture one or more portions of image data. An imaging device may include various types of cameras such as a photographic and/or videographic camera, a one- two- or three-dimensional camera, an RGB camera, a monochromatic camera, or any other device capable of imaging the object for one or more of the respective functions described herein.

The term "reflective surface" may refer to a surface that may reflect electromagnetic wave, light, photon, and/or radiation. Examples of a reflective surface include but not limited to mirror, a metal surface, a glass surface, water, etc.

### EXAMPLE EMBODIMENTS

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

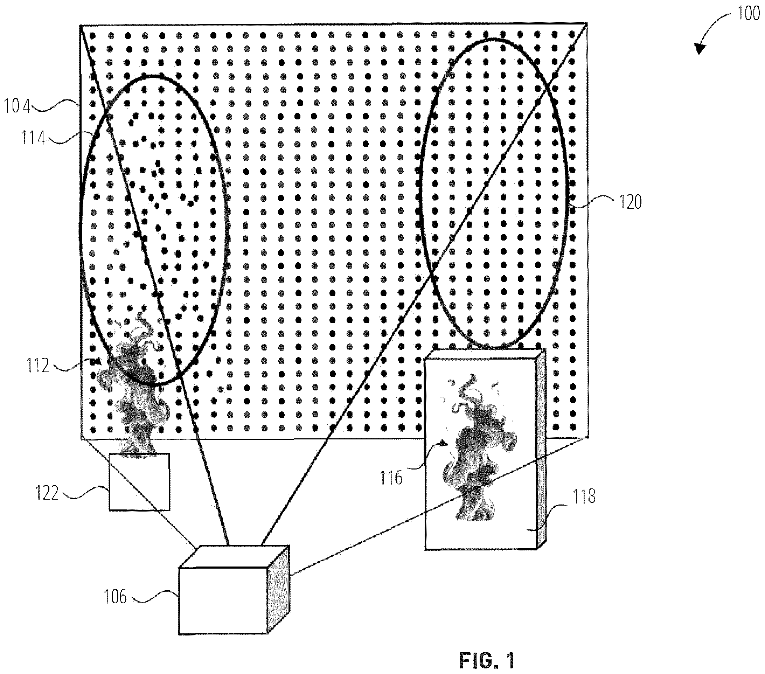

Referring now to FIG. 1 a schematic diagram illustrating a fire detection system 100 is provided in accordance with various embodiments of the present disclosure. In various embodiments, the fire detection system 100 includes a fire detection apparatus 106.

In various embodiments, the fire detection apparatus 106 includes one or more imaging devices. In various embodiments, the one or more imaging device captures images of the field of view 104 continuously or intermittently.

A real fire 112 may be present in the field of view 104. A real fire 112 may be caused by a source of fire 122. Since a real fire raises the temperature of nearby air, hot air rises and the refractive index changes (e.g., is decreased) in a region in proximity to the real fire, for example region 114 approximately above the real fire 112. A reflection of a fire 116 may be captured in one or more image frames by the imaging devices. The reflection of a fire 116 may be a reflection of a fire (e.g., real fire 112) from a reflective surface 118. In various embodiments, there is no heating effect to the air surrounding the reflections of a fire 116 and no impact and/or variation on the refractive index in a region 120 in proximity of (e.g., approximately above) the reflection of a fire 116.

In various embodiments, background features may be present and be captured by the one or more imaging devices. In various embodiments, the background features may be any pattern, or structures in the background of the image. In various embodiments, the background features may be added to the background, for example painted on the background or created using various objects. The background features are represented using the dots in FIG. 1, however they may have any other shapes, forms, and/or arrangements.

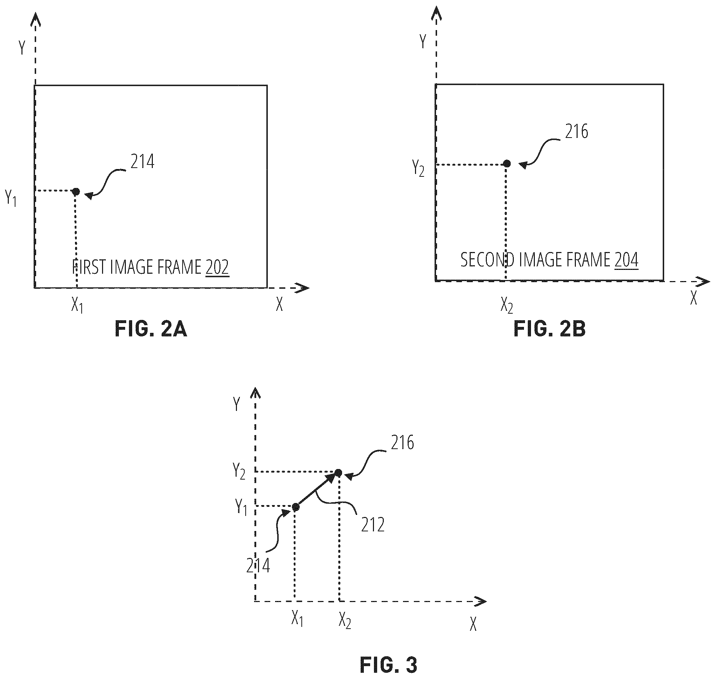

The one or more imaging devices may be configured to capture a first image frame from a field of view 104, for example first image frame 202 as for example illustrated by FIG. 2A. The one or more imaging device may also capture a second image frame 204 from the field of view 104 as for example illustrated by FIG. 2B. In various embodiments, the second image frame 204 is a subsequent image frame to the first image frame 202.

In various embodiments, the fire detection apparatus 106 may include one or more computing devices. The one or more computing devices may be in proximity of the one or more imaging devices or placed remotely with respect to the one or more imaging devices. In some embodiments, at least one of the one or more computing devices is placed in proximity of the one or more imaging devices and at least one of the one or more computing devices is placed in a remote location with respect to the one or more imaging device. The one or more computing devices are electronically coupled to and electronically communicate with the one or more imaging devices.

In various embodiments, one or more computing devices are configured to compare a first location of a background feature 214 in the first image frame 202 with a second location of the second location of the background feature 216 in the second image frame 204. The one or more computing device may calculate a flow vector 212 using the comparison of the first location of the background feature 214 in the first image frame and the second location of the background feature in the second image frame 216, as for example illustrated by FIG. 3. In various embodiments, the one or more computing devices differentiate between an image of a real fire and an image of a reflected fire using the flow vector 212.

In various embodiments, the one or more computing device may determine the flow vector 212 by determining coordinates of the one or more pixels corresponding to a feature, for example the [X,Y] coordinates of the one or more pixels corresponding to first location of a background feature 214 (e.g. [X₁,Y₁]) in the first image frame 202. The computing device may determine the [X,Y] coordinates of the one or more pixels corresponding to the second location of the same background feature 216 (e.g. [X₂,Y₂]) in the second image frame 204 (e.g. the next image frame). The flow vector is calculated using the difference of the coordinates among the two frames. For example, the flow vector may be calculated as follows:

### Flow Vector

In various embodiments, the flow vector may be determined as the vector connecting the first location coordinates of first location of a background feature 214 with the second location coordinates of second location of the background feature 216.

Using the flow vector, the one or more computing device may determine the amount of movement of the background features between the two image frames. In various embodiments, the one or more computing device stores the image frames in a memory device. If no movement occurs between the two frames, the computing device discards the older image frame and uses the newer image frame to compare with a next image frame to determine a movement of the background features.

In various embodiments, the one or more computing devices are further configured to determine an absolute value of the flow vector . For example, the absolute value of the flow vector is determined as:

In various embodiments, the one or more computing devices compare the absolute value of the flow vector with a variation threshold. In various embodiments, the one or more computing devices differentiate between an image of a real fire and an image of a reflected fire using the comparison of the absolute value of the flow vector with the variation threshold for example as described herein.

In various embodiments, the one or more computing devices are further configured to determine a region 114 in the first image frame and the second image frame. In various embodiments, the one or more computing devices determine region 114 where the absolute value of flow vectors for a subset of background features in the region 114 is greater than the variation threshold.

For example, the absolute value of the flow vectors corresponding to a first subset of locations of background features of the region 114 in the first image frame and a second subset of locations of the background features of the region in the second image frame have absolute values greater than the variation threshold.

In various embodiments, the one or more computing devices further determine a surface area of the region 114. The one or more computing devices compare the surface area of the region with a surface area threshold, and determine the region as a potential fire location when the surface area is greater than the surface area threshold. In example embodiments, when a large enough area in the field of view has a high number of background features with a large flow vector, it may be an indication of a hot air flow potentially caused by a fire.

In various embodiments, the one or more computing devices are further configured to search for an image of a fire in an image frame. In various embodiments, an image of the fire may be searched for and/or detected in the first image frame or the second image frame. In various embodiments, the image of the fire may be search for and/or detected in a third image frame different from the first or second image frames.

In various embodiments, the one or more computing devices determine a center of the image of fire, and determine a center of the region. In various embodiments, the one or more computing devices determine a distance between the center of the region and the center of the image of fire. In various embodiments, the one or more computing devices are further configured to determine the potential fire location to be a real fire location when the distance between the center of the region and the center of the image of fire is less than a distance threshold. For example, when the one or more computing devices detect an image of a fire near a region with a high indication of a hot air flow, it may be high indication of a real fire. However, when no hot air flow is detected near a detected fire image, the detected fire image may be a reflection of the fire because it is not causing a hot air flow in its proximity.

In various embodiments, the one or more computing devices determine a real fire 112 when the detected region 114 is in proximity of the detected image of fire 112 and when the 114 is above the image of the fire 114 with reference to a ground surface.

In various embodiments, the one or more computing devices are further configured to determine the potential real fire location to be a potential cause of fire location when the distance between the center of the region and the center of the image of fire is greater than a distance threshold. For example, if a region with a high hot air flow is detected but no nearby image of a fire is detected, the high hot air flow vector region may be an indication of a hot gas leak, or an overheated object. In various embodiments, the fire detection system 100 may tag the area as an area where a potential cause for fire may exist.

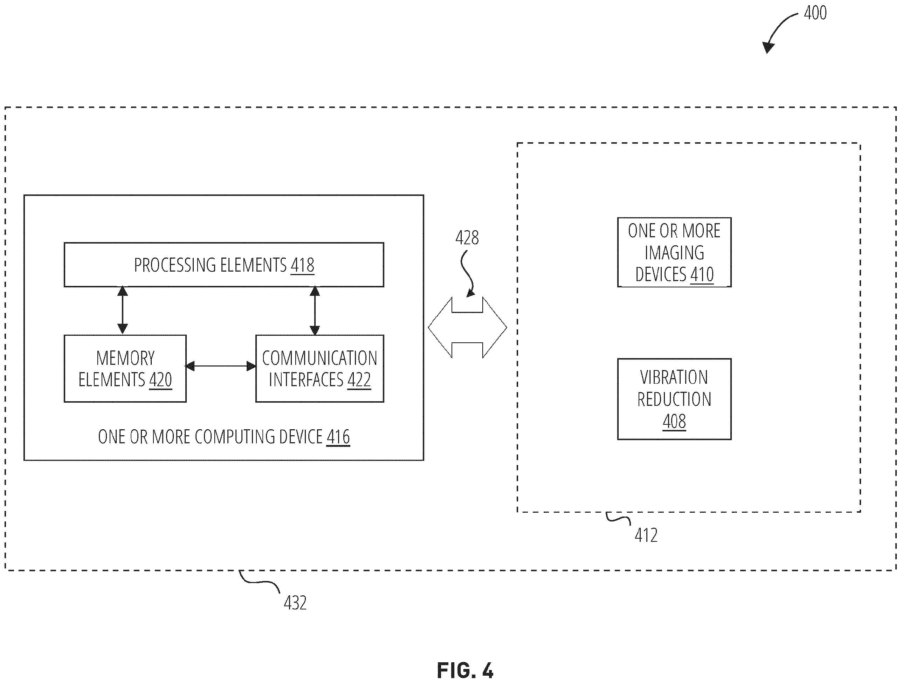

Referring now to FIG. 4 a schematic diagram illustrating fire detection system 400 is provided in accordance with various embodiments of the present disclosure. In various embodiments, the fire detection system 400 includes one or more vibration reduction devices 408. In various embodiments, the one or more vibration reduction devices 408 may be used in combination with the one or more imaging devices 410. The one or more vibration reduction devices 408 may be mechanically coupled to one or more imaging devices 410 and/or mechanically coupled to a housing 412 or housing 432 housing the one or more imaging devices 410. In various embodiments, vibration cased on the one or more imaging devices 410 may be reduced and/or compensated using one or more vibration reduction devices 408 for example in real time. In various embodiments, vibration may be reduced using post processing of the images captured.

In example embodiments, the fire detection systems and apparatus as provided herein may work both in indoor and outdoor environments. For example, using a one or more imaging device 426 that is weather resistant, the fire detection system 400 may be used in various environments with high range of temperature variation and weather conditions. In various embodiments, the housing 412 or housing 432 may be weather resistant.

In example embodiments, various one or more imaging devices 410 with large fields of views may be used to monitor a large field of view without a need for bulky optics such as bulky mirrors.

In various embodiments, the fire detection system 400 includes one or more computing device 416. In various embodiments, some or all of the one or more computing device 416 may be placed inside the housing 412 or outside the housing 412. In various embodiments, the one or more computing device 416 may be placed inside another housing 432. In various embodiments, various other components of the fire detection system 400 may be placed inside the housing 412, outside the housing 412, or partially inside and partially outside the housing 412. For example, at least one of the one or more imaging devices 410 and/or the one or more vibration reduction devices 408 may be placed inside, outside, or partially inside and partially outside the housing 412. In various embodiments, some of the one or more imaging devices 410 may be places inside and some may place outside the housing 412.

In various embodiments, the one or more computing device 416 may be placed locally with respect to the one or more imaging devices 410 and/or placed remotely from the one or more imaging devices 410. In various embodiments, the one or more computing device 416 is in communication with various other components of the fire detection system 400 through communication interfaces 422 and over the wired and/or wireless medium 428.

In general, the terms computing apparatus, computer, system, device, entity, and/or similar words used herein interchangeably can refer to, for example, one or more computers, computing entities, desktops, mobile phones, tablets, notebooks, laptops, distributed systems, kiosks, input terminals, servers or server networks, blades, gateways, switches, processing devices, processing entities, controllers, control systems, set-top boxes, relays, routers, network access points, base stations, the like, and/or any combination of devices or entities adapted to perform the functions, operations, and/or processes described herein. Such functions, operations, and/or processes can include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. The one or more computing device 416 can include any computing device including, for example, a mobile device handling and/or processing apparatus configured to perform one or more steps/operations of one or more method or techniques described herein. In some embodiments, the one or more computing device 416 can include and/or be in association with one or more programmable logic controller (PLC), desktop computer(s), laptop(s), server(s), cloud computing platform(s), controller systems, and/or the like. In some example embodiments, the one or more computing device 416 can be configured to receive and/or transmit image processing instructions, data, and/or the like between the one or more fire detection system 400 and/or their components to perform one or more steps/operations of one or more fire detection system 400 handling and/or processing techniques described herein.

The one or more computing device 416 can include, or be in communications with, one or more processing elements 418 (also referred to as processors, processing circuitry, digital circuitry, and/or similar terms used herein interchangeably) that communicate with other elements within the one or more computing device 416 via a bus, for example. As will be understood, the processing elements 418 can be embodied in a number of different ways.

For example, the processing elements 418 can be embodied as one or more complex programmable logic devices (CPLDs), microprocessors, multi-core processors, coprocessing entities, application-specific instruction-set processors (ASIPs), microcontrollers, and/or controllers. Further, the processing elements 418 can be embodied as one or more other processing devices or circuitry. The term circuitry can refer to an entirely hardware embodiment or a combination of hardware and computer program products. Thus, the processing elements 418 can be embodied as integrated circuits, application specific integrated circuits (ASICs), field programmable gate arrays (FPGAs), programmable logic arrays (PLAs), hardware accelerators, digital circuitry, and/or the like.

As will therefore be understood, the processing elements 418 can be configured for a particular use or configured to execute instructions stored in volatile or non-volatile media or otherwise accessible to the processing elements 418. As such, whether configured by hardware or computer program products, or by a combination thereof, the processing elements 418 can be capable of performing steps or operations according to embodiments of the present disclosure when configured accordingly.

In one embodiment, the one or more computing device 416 can further include, or be in communication with, one or more memory elements 420. The one or more memory elements 420 can include non-volatile and/or volatile media. The memory elements 420, for example, can include non-volatile media (also referred to as non-volatile storage, memory, memory storage, memory circuitry and/or similar terms used herein interchangeably). In one embodiment, the non-volatile storage or memory can include one or more non-volatile storage or memory media, including, but not limited to, hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like.

As will be recognized, the non-volatile storage or memory media can store databases, database instances, database management systems, data, applications, programs, program modules, scripts, source code, object code, byte code, compiled code, interpreted code, machine code, executable instructions, and/or the like. The term database, database instance, database management system, and/or similar terms used herein interchangeably can refer to a collection of records or data that is stored in a computer-readable storage medium using one or more database models, such as a hierarchical database model, network model, relational model, entity- relationship model, object model, document model, semantic model, graph model, and/or the like.

In addition, or alternatively, the memory elements 420 can include volatile memory. For example, the one or more computing device 416 can further include, or be in communication with, volatile media (also referred to as volatile storage memory, memory storage, memory circuitry and/or similar terms used herein interchangeably). In one embodiment, the volatile storage or memory can also include one or more volatile storage or memory media, including, but not limited to, RAM, DRAM, SRAM, FPM DRAM, EDO DRAM, SDRAM, DDR SDRAM, DDR2 SDRAM, DDR3 SDRAM, RDRAM, TTRAM, TRAM, Z-RAM, RIMM, DIMM, SIMM, VRAM, cache memory, register memory, and/or the like.

As will be recognized, the volatile storage or memory media can be used to store at least portions of the databases, database instances, database management systems, data, applications, programs, program modules, scripts, source code, object code, byte code, compiled code, interpreted code, machine code, executable instructions, and/or the like being executed by, for example, the processing elements 418. Thus, the databases, database instances, database management systems, data, applications, programs, program modules, scripts, source code, object code, byte code, compiled code, interpreted code, machine code, executable instructions, and/or the like can be used to control certain aspects of the operation of the one or more computing device 416 with the assistance of the processing elements 418 and operating system.

As indicated, in one embodiment, the one or more computing device 416 can also include one or more communication interfaces 422 for communicating with various computing entities, such as by communicating data, content, information, and/or similar terms used herein interchangeably that can be transmitted, received, operated on, processed, displayed, stored, and/or the like. Such communication can be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. Similarly, the one or more computing device 416 can be configured to communicate via wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol.

The fire detection system 400 can include input/output circuitry for communicating with one or more users or other systems or devices. The input/output circuitry, for example, can include one or more interfaces for providing and/or receiving information from one or more users or other systems or devices fire detection system 400 or otherwise such as providing alarms, alerts, and/or fire location information. The input/output circuitry can be configured to receive user input or input from various other systems or devices through one or more of the interfaces of the fire detection system 400.

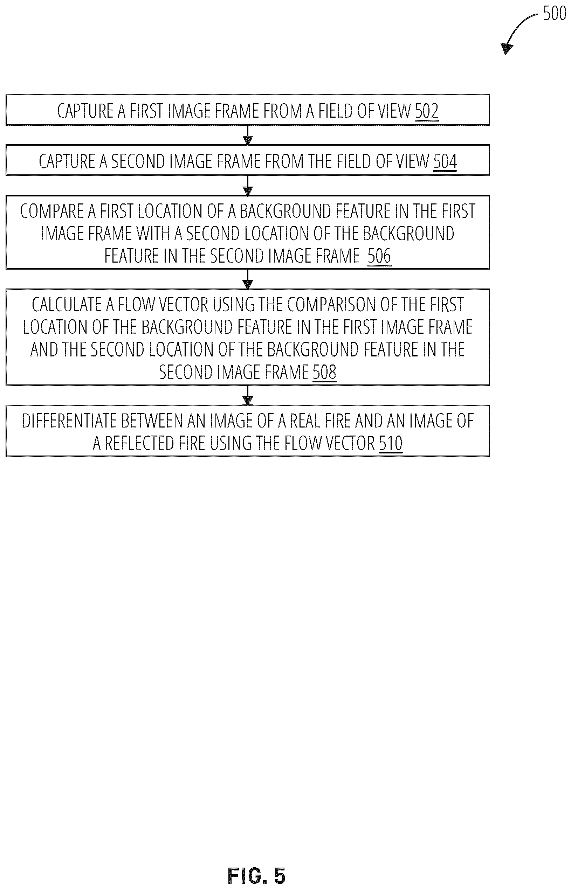

Referring now to FIG. 5 a schematic diagram illustrating a method 500 is provided in accordance with various embodiments of the present disclosure. In various embodiments, the one or more computing devices 416 perform at least one of the steps of the method 500. In various embodiments, at step 502, method 500 captures a first image frame from a field of view. In various embodiments, the method 500 captures the first image frame using one or more imaging device. For example, the one or more computing devices may instruct the one or more imaging devices to capture the first image frame.

In various embodiments, at step 504, method 500 captures a second image frame from the field of view. In various embodiments, the method 500 captures second first image frame using one or more imaging device. For example, the one or more computing devices may instruct the one or more imaging devices to capture the second image frame.

In various embodiments, at step 506, method 500 compares a first location of a background feature in the first image frame with a second location of the background feature in the second image frame. In various embodiments, the one or more computing devices compares for example first location of a background feature 214 with the second location of the background feature 216.

In step 508, method 500 calculates a flow vector using the comparison of the first location of the background feature in the first image frame and the second location of the background feature in the second image frame. For example, the one or more computing devices calculate flow vector 212 as for example described with reference to FIG. 3.

In step 510, method 500 differentiates between an image of a real fire and an image of a reflected fire using the flow vector. For example, the one or more computing devices use the flow vector 212 to differential between an image of a real fire and an image of a reflected fire.

In various embodiments, the one ore one or more computing devices determine a first location coordinates of the background feature in the first image frame 202 and determine a second location coordinates of the background feature in the second image frame 204. In various embodiments, the first image frame and the second image frame are subsequent image frames.

In various embodiments, the one or more computing devices determine the flow vector 212 as a vector connecting the first location coordinates with the second location coordinates.

In various embodiments, the one or more computing devices determine an absolute value of the flow vector. The one or more computing devices may then compare the absolute value of the flow vector with a variation threshold and differentiate between an image of a real fire and an image of a reflected fire using the comparison of the absolute value of the flow vector with the variation threshold.

In various embodiments, the one or more computing devices determine a region, for example region 114, in the first image frame and the second image frame. In various embodiments, the region is determined such that an absolute value of the flow vectors corresponding to a first subset of locations of background features of the region in the first image frame and a second subset of locations of the background features of the region in the second image frame have absolute values greater than the variation threshold. In various embodiments, the first and second subset of locations are the same.

In various embodiments, the region is determined such that a subset of background feature locations in the region have corresponding flow vector with an absolute value larger than the variation threshold. In various embodiments, the size of the subset of background feature locations is determined during a calibration of the fire detection system. In various embodiments, the subset includes all the background feature locations in the region.

In various embodiments, the one or more computing devices determine a surface area of the region and compare the surface area of the region with a surface area threshold. The one or more computing devices may determine the region as a potential fire location when the surface area is greater than the surface area threshold.

In various embodiments, the one or more computing devices detect an image of a fire in a third image frame. In various embodiments, the third image frame may be the same as the first or second image frames. The one or more computing devices may use various image processing, image recognition, and/or machine learning techniques to detect an image of a fire in the third image frame.

In various embodiments, the one or more computing devices determine a center of the image of fire and determine a center of the region. The one or more computing devices may determine a distance between the center of the region and the center of the image of fire.

In various embodiments, the one or more computing devices determine the potential fire location to be a real fire location when the distance between the center of the region and the center of the image of fire is less than a distance threshold.

In various embodiments, the one or more computing devices determine the potential fire location to be a potential cause of fire location when the distance between the center of the region and the center of the image of fire is greater than a distance threshold.

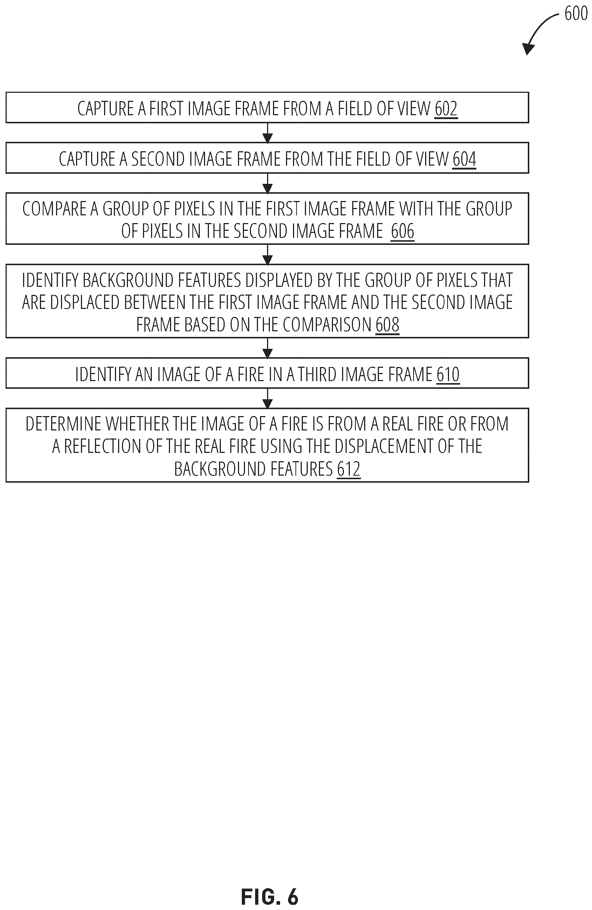

Referring now to FIG. 6 a schematic diagram illustrating a method 600 is provided in accordance with various embodiments of the present disclosure. In various embodiments, the one or more computing devices 416 perform at least one of the steps of the method 600.

In various embodiments, at step 602, method 600 captures a first image frame from a field of view. In various embodiments, the one or more imaging devices capture the first image frame of the field of view. In various embodiments, the one ore one or more computing devices instruct the one or more imaging devices to capture the first image frame of the field of view.

In various embodiments, at step 604, method 600 captures a second image frame from the field of view. In various embodiments, the one or more imaging devices capture the second image frame of the field of view. In various embodiments, the one ore one or more computing devices instruct the one or more imaging devices to capture the second image frame of the field of view.

In various embodiments, at step 606, method 600 compares a group of pixels in the first image frame with the group of pixels in the second image frame. For example, one or more computing devices compares a group of pixels in the first image frame with the group of pixels in the second image frame to determine any change in the image captured of the background features. In various embodiments, at step 608, method 600 identifies background features displayed by the group of pixels that are displaced between the first image frame and the second image frame based on the comparison. For example, the one or more computing devices uses image comparison techniques to identify the background features that are displaced. The displacement of the background features may be due to a change in a refractive index caused by a fire.

In various embodiments, at step 610, method 600 identifies an image of a fire in a third image frame. In various embodiments, at step 612, method 600 determines whether the image of a fire is from a real fire or from a reflection of the real fire using the displacement of the background features. For example, the one or more computing devices use a third image frame (which may be the same as any of the first or second image frames or may be a different image frame) to detect an image of a fire as previously described. Using the detected image of fire, the one or more computing devices may determine whether the image of a fire is from a real fire or from a reflection of the real fire using the displacement of the background features as described above.

### CONCLUSION

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for detecting fire, the method comprising:
capturing a first image frame from a field of view;
capturing a second image frame from the field of view;
comparing a first location of a background feature in the first image frame with a second location of the background feature in the second image frame;
calculating a flow vector using the comparison of the first location of the background feature in the first image frame and the second location of the background feature in the second image frame; and
differentiating between an image of a real fire and an image of a reflected fire using the flow vector.

2. The method of claim 1, further comprising:
determining a first location coordinates of the background feature in the first image frame;
determining a second location coordinates of the background feature in the second image frame; and
determining the flow vector as a vector connecting the first location coordinates with the second location coordinates.

3. The method of claim 2, further comprising:
determining an absolute value of the flow vector;
comparing the absolute value of the flow vector with a variation threshold; and
differentiating between an image of a real fire and an image of a reflected fire using the comparison of the absolute value of the flow vector with the variation threshold.

4. The method of claim 2, further comprising determining a region in the first image frame and the second image frame, wherein an absolute value of the flow vectors corresponding to a first subset of locations of background features of the region in the first image frame and a second subset of locations of the background features of the region in the second image frame have absolute values greater than the variation threshold.

5. The method of claim 4, further comprising:
determining a surface area of the region;
comparing the surface area of the region with a surface area threshold; and
determining the region as a potential fire location when the surface area is greater than the surface area threshold.

6. The method of claim 5, further comprising:
detecting an image of a fire in a third image frame;
determining a center of the image of the fire;
determining a center of the region; and
determining a distance between the center of the region and the center of the image of the fire.

7. The method of claim 6, further comprising determining the potential fire location to be a real fire location when the distance between the center of the region and the center of the image of the fire is less than a distance threshold.

8. The method of claim 6, further comprising determining the potential fire location to be a potential cause of fire location when the distance between the center of the region and the center of the image of the fire is greater than a distance threshold.

9. A method for detecting fire, the method comprising:
capturing a first image frame from a field of view;
capturing a second image frame from the field of view;
comparing a group of pixels in the first image frame with the group of pixels in the second image frame;
identify background features displayed by the group of pixels that are displaced between the first image frame and the second image frame based on the comparison;
identifying an image of a fire in a third image frame; and
determining whether the image of a fire is from a real fire or from a reflection of the real fire using the displacement of the background features.

10. A fire detection apparatus comprising:
an imaging device configured to:
capture a first image frame from a field of view;
capture a second image frame from the field of view;
one or more computing devices configured to:
compare a first location of a background feature in the first image frame with a second location of the background feature in the second image frame;
calculate a flow vector using the comparison of the first location of the background feature in the first image frame and the second location of the background feature in the second image frame; and
differentiate between an image of a real fire and an image of a reflected fire using the flow vector.

11. The fire detection apparatus of claim 10, wherein the one or more computing devices are further configured to:
determine a first location coordinates of the background feature in the first image frame;
determine a second location coordinates of the background feature in the second image frame; and
determine the flow vector as a vector connecting the first location coordinates with the second location coordinates.

12. The fire detection apparatus of claim 11, wherein the one or more computing devices are further configured to:
determine an absolute value of the flow vector;
compare the absolute value of the flow vector with a variation threshold; and
differentiate between an image of a real fire and an image of a reflected fire using the comparison of the absolute value of the flow vector with the variation threshold.

13. The fire detection apparatus of claim 11, wherein the one or more computing devices are further configured to determine a region in the first image frame and the second image frame, wherein an absolute value of the flow vectors corresponding to a first subset of locations of background features of the region in the first image frame and a second subset of locations of the background features of the region in the second image frame have absolute values greater than the variation threshold.

14. The fire detection apparatus of claim 13, wherein the one or more computing devices are further configured to:
determine a surface area of the region;
compare the surface area of the region with a surface area threshold; and
determine the region as a potential fire location when the surface area is greater than the surface area threshold.

15. The fire detection apparatus of claim 14, wherein the one or more computing devices are further configured to:
detect an image of a fire in a third image frame;
determine a center of the image of the fire;
determine a center of the region; and
determine a distance between the center of the region and the center of the image of the fire.
